# EUROPÄISCHE PATENTSCHRIFT

(11) **EP 1 259 651 B1**
(45) Veröffentlichungstag und Bekanntmachung des Hinweises auf die Patenterteilung: **12.05.2004**
(21) Anmeldenummer: 01911699.5
(22) Anmeldetag: 24.02.2001
(51) Int. Cl.: C21C 5/00, C21C 5/52, C21C 7/068, C21C 5/42, F27B 3/06

(54) **ANLAGE ZUR HERSTELLUNG VON STAHL**
SYSTEM FOR PRODUCING STEEL
INSTALLATION DE PRODUCTION D'ACIER

(30) Priorität: 01.03.2000 DE 10009812
(43) Veröffentlichungstag der Anmeldung: 27.11.2002
(73) Patentinhaber: SMS Demag Aktiengesellschaft, 40237 Düsseldorf (DE)
(72) Erfinder: KÜHNE, Klaus-Jürgen, 46569 Hünxe (DE)
(74) Vertreter: Valentin, Ekkehard, Dipl.-Ing.
(86) Internationale Anmeldenummer: PCT/EP2001/002105
(87) Internationale Veröffentlichungsnummer: WO 2001/064962

(56) Entgegenhaltungen:
- EP-A- 0 732 411
- WO-A-97/18050
- DE-A- 2 921 702
- DE-A- 4 006 281
- DE-A- 4 445 209
- DE-A- 19 728 102
- DE-U- 9 304 662
- US-A- 2 268 918

## Beschreibung

Die Erfindung betrifft eine Anlage zur Herstellung von Stahl, welche ein Gefäß, in dem der metallische Einsatz sowohl geschmolzen, gefrischt und gefeint wird, mit einem Gefäßoberteil mit mindestens einer Öffnung, durch die hindurch mindestens eine Elektrode in das Gefäß einfahrbar sind, sowie mit einem Gefäßunterteil mit Gefäßboden umfaßt sowie Mittel zum Abstechen der Schmelze und Schlacke aus dem Gefäß.

Üblicherweise findet zur Herstellung von Stählen, insbesondere Edelstählen, wie chromhaltigen rost-, säure- und hitzebeständige Stähle, ein Aufschmelzen der Einsatzstoffe im Elektrolichtbogenofen mit sich anschließendem Frischen in einem separaten Konverter statt. Hierbei dient der Lichtbogenofen als Vorschmelzaggregat, der eigentliche Prozeß des Frischens bzw. Feinens zur Herstellung der gewünschten Stahlqualität erfolgt in dem Konverter.

Aus der DE 197 28 102 A1 ist bekannt, diese beiden Prozesse, d.h. Schmelz- und Frischprozeß, in einem einzigen Gefäß durchzuführen. Ein hierfür geeignetes Gefäß ist mit einem bauchigen Gefäßmittel- und -unterteil ausgerüstet, welches - wie bei den bekannten Konverteranlagen üblich - in einem Tragring drehbar gelagert ist. Der Abstich von Schmelze und Schlacke erfolgt durch Drehen des Gefäßes über die Mittelpunktachse und mittels Abstichstutzen oder Abstichlöchem in der verschwenkten Position in die auf Hallenflumiveau befindlichen Stahlgießpfanne.

Ein derartiger Tragring, dessen Lagerung sowie die notwendige Anlage zum Kippen des Gefäßes mittels des Tragrings sind in ihrer Gestaltung und Montage aufwendig und erfordern umfangreiche Antriebs- und Steuerungsmittel. Zudem setzt ein solches Gefäß mit Tragring in sicheres Fundament oder sichere Ofenbühne voraus, die entsprechend platz- und kraftaufwendig konstruiert sein müssen.

Aus der DE 44 45 209 A1 ist ein Verfahren sowie eine Vorrichtung zum Betreiben eines Doppelgefäß-Lichtbogenofens bekannt. In jeweils einem Ofenteil I bzw. II werden abwechselnd entweder der Frisch- oder der Einschmelzprozess durchgeführt. Im Gefäßboden des Gefäßunterteils ist ein Abstichloch zum Abstechen der Schmelze vorgesehen; die Schlacke wird durch eine Schlackentür abgestochen.

Die DE 40 06 281 A1 beschreibt ein metallurgisches Aggregat mit einem kippbaren Gefäß, das sich auf einem fahrbaren Traggestell abstützt. Das Gefäß ist in einem Rahmen befestigt, der sich über eine Rahmenhubvorrichtung in Form hydraulisch betätigbarer Kolben-/Zylindereinheiten auf dem Traggestell abstützt. Hierbei wirken die Kolben-/Zylindereinheiten bzw. Hubelemente unmittelbar mit dem Gefäßboden zusammen.

In der DE 93 04 662.6 ist ein Stahlwerks-Elektroofen mit einem Ofengefäß beschrieben, das kippbar gelagert ist. Hierbei ist die Kippvorrichtung als ein das Ofengefäß umgebender Tragring ausgebildet, an dem das Ofengefäß abgestützt ist. Der Tragring selbst ist nach Art eines Konvertertragrings über zwei einander diametral gegenüberliegende Tragzapfen gegenüber dem Fundament kippbar gelagert.

Schließlich ist in der DE-A-29 21 702 ein nicht kippbaren Elektrolichtbogen ofen ohne Frischfunktion durch Gaszufuhr mit einer zentrisch angeordneten einzigen Bodenabstichöffnung beschrieben.

Ausgehend vom eingangs erwähnten Stand der Technik liegt der Erfindung die Aufgabe zugrunde, eine gattungsgemäße Anlage bei Beibehaltung der kombinierten Schmelz- und Frischfunktion hinsichtlich ihrer baulichen Ausführung zu vereinfachen.

Diese Aufgabe wird durch die Anlage mit den Merkmalen des Anspruchs 1 gelöst. Vorteilhafte Ausführungsformen sind in den Unteransprüchen offenbart.

Erfindungsgemäß wird vorgeschlagen, anstelle des bekannten Abstichsystems, wobei das Gefäß, das mit Abstichstutzen versehen ist, von einem Tragring aufgenommen und zum Abstechen von Schlacke und Schmelze um seine Achse verschwenkt wird, ein Bodenabstichsystem vorzusehen zum Abstechen der Schmelze und der Schlacke - in ein unterhalb des Gefäßes angeordneten Auffangbehälter in nichtverschwenkter Grundposition des Gefäßes.

Um gleichzeitig nicht gänzlich auf eine Kippbewegung verzichten zu müssen, die insbesondere als Schaukel- bzw. Wippbewegung des Schmelzbades mit kleinen Kippwinkeln um die Grundposition, vorzugsweise kleiner als ±5°, zum Ende des Schmelzvorgangs erwünscht ist, wird vorgeschlagen, daß die Anlage ein Kippsystem aufweist mit einem ein- oder mehrteiligen Kipprahmen, der in Höhe des Gefäßbodens des Gefäßes angeordnet ist und auf dem das Gefäß absetzbar ist, indem der Gefäßboden darin eintaucht.

Das Kippsystem ist mit einem Kippelement versehen, das einseitig - vorzugsweise mittels einer Hubbewegung - auf den Rahmen derart wirkt, daß der Rahmen und somit das Gefäß in eine Kippbewegung versetzt werden, sowie mit mindestens einem - dem Kippelement gegenüberliegenden - Lagerelement zum Auffangen der Kippbewegung des Gefäßes. Das Lagerelement ist entweder ein- oder mehrteilig ausgebildet.

Insgesamt kann aufgrund des vorgeschlagenen Bodenabstichsystems auf die herkömmliche - aufwendige - Kippvorrichtung mit Tragring, der das bauchige Mittelstück des Schmelz- und Frischgefäßes umfaßt, mit den hierzu erforderlichen Antriebs- und Steuermitteln verzichtet werden. Es wird ein Gefäß mit insgesamt baulich vereinfachter Gestaltung und somit geringerem Montageaufwand erreicht. Wegen Verzichts auf den Tragring werden auch die Anforderungen und somit Kosten für die Ofenbühne bzw. das Fundament geringer. Mit einfachen mechanischen Mitteln (vorzugsweise mit einem oder mehreren hydraulisch betätigbaren Kippzylindem betriebener Kipprahmen) wird gleichwohl eine Möglichkeit für ein Kippen des Gefäßes bereitgestellt. Alternativ zu der Kipprahmenlösung ist es aber auch durchaus denkbar, daß das Gefäß zur Erzeugung der Kippbewegung um eine kurze Strecke horizontal über eine Gleitschiene mittels Hydraulikzylindern verfahren wird.

Um sowohl bei der ersten Ausführungsform des Gefäßes mit Bodenäbstichsystem, aber ohne Kippsystem, als auch bei der zweiten Ausführungsform des Gefäßes mit Kippsystem eine Positionierung des Gefäßes zu gewährleisten, weist das Gefäßunterteil seitlich versetzte oder verstärkte Wandungsbereiche oberhalb des Gefäßbodens zur Bildung von stabilen Absetzflächen auf, die entweder zur Auflage auf Absetzstützen, die entlang des Gefäßumfangs angeordnet sind, oder unmittelbar zur Auflage auf dem Kipprahmen kommen. Die Absetzstützen sind entweder auf der Ofenbühne oder dem Fundament direkt oder auf dem Kipprahmen angeordnet.

Für das vorgeschlagene Bodenabstichsystem könnte beispielsweise das in der WO 97/18050 beschriebene System in Frage kommen. Der Gegenstand der Erfindung ist aber nicht auf ein solches Bodenabstichsystem beschränkt, es sind alle Arten bekannter Bodenabstichsysteme denkbar. Erfindungsgemäß werden Bodenabstichsysteme vorgeschlagen, deren Abstichöffnungen entweder zentrisch oder auch exzentrisch zur vertikalen Mittelachse des Gefäßes angeordnet sind.

Uber das vorgeschlagene Bodenabstichsystem wird in der nicht gekippten Grundstellung ± 0° sowohl die Schmelze als auch die Schlacke nacheinander in einem Guß nach dem Frischen abgestochen.

Das Gefäß ist auf einer Ofenbühne in Form einer Stahlkonstruktion, auf einem Fundament oder vorzugsweise auf dem Kipprahmen entweder fest oder lösbar als Wechselgefäß angeordnet, um die durch Neuzustellung, Wartungsarbeiten oder Reparaturen bedingten Stillstandzeiten durch Einwechseln eines Ersatzgefäßes zu verringern.

Insgesamt ergeben sich dann die Ausführungsformen des stationären oder kippbaren fest angeordneten Gefäßsystems und die Ausführungsformen des stationären oder kippbaren Wechselgefäßsystems.

Das Gefäß ist im Schmelzbetrieb mit einem Ofendeckel versehen, der vorzugsweise wassergekühlt ist. Die Öffnung im Ofendeckel zur Aufnahme der Elektroden kann unterschiedlich gestaltet sein, je nachdem, ob die Heizeinrichtung zum Einführen der Elektroden auf der Ofenbühne oder dem Fundament starr oder auf dem Kipprahmen des Kippsystems angeordnet ist und folglich die Kippbewegung bzw. Schaukelbewegung mitmacht. Bei der ersten Ausführungsform muß die Öffnung im Verhältnis zum Umfang der Elektroden, die - gehalten von einem Elektrodentragarm - über eine Schwenkvorrichtung der Heizeinrichtung von oben in die Öffnung des Gefäßes eingeführt werden, derart aufgeweitet sein, daß diese bei der Kippbewegung des Gefäßes nicht an die Öffnungswandung anstoßen. Wenn die Heizeinrichtung und somit Halteeinrichtung für die Elektroden die Bewegung mitmachen, können die Elektrodenöffnungen entsprechend kleiner ausgeführt sein.

Das Vorsehen des Gefäßes mit wegschwenkbaren oder alternativ nach einem geringfügigen Hub horizontal verfahrbaren Deckeln bzw. Hauben bietet aber noch einen anderen wichtigen Vorteil. Der Elektrodenhub fällt im Gegensatz zu dem aus der DE 197 28 102 A1 bekannten Gefäß deutlich geringer aus, weil die Elektroden im Zustand der weggeschwenkten oder verfahrenen Konverterhaube herausgefahren werden. Da die Elektroden lediglich über den Gefäßrand wegzuschwenken oder zu verfahren sind, ist der Elektrodenhub wesentlich kleiner als bei dem bekannten Gefäß, bei dem die Elektroden über das wegen des Abschlackvorgangs verlängerte zylindrische Gefäßteil gehoben werden müssen.

Schließlich wird eine Doppelofenanlage vorgeschlagen, die zwei der erfindungsgemäß vorgeschlagenen Gefäße bzw. Anlagen aufweist, in denen jeweils zeitlich parallel entweder die Schmelz- oder Konverterphase ablaufen. Bei diesen unterschiedlichen Phasen kommen verschiedene Deckelsysteme zum Einsatz. Bei der Schmelzphase handelt es sich vorzugsweise um einen größtenteils wassergekühlten Ofendeckel in Rohrkonstruktion, d.h. parallel aneinander angeordnete kühlwasserdurchflossene (in Rohr an Rohr oder Rohr-Spalt-Rohr Design) Rohrleitungen, bei der Konverterphase eignet sich eine Haube aus wassergekühltem Feuerfestbeton.

Weitere Vorteile und Merkmale der Erfindung werden deutlich anhand der nachfolgenden Beschreibung bevorzugter Ausführungsbeispiele unter Bezugnahme auf die beiliegenden Abbildungen. Darin zeigen:
- Figur 1: einen Querschnitt einer ersten Ausführungsform der vorgeschlage nen Anlage;
- Figur 2: einen Querschnitt einer zweiten Ausführungsform der vorgeschlagenen Anlage mit Kippsystem;
- Figur 3: eine Draufsicht auf eine Doppelofenanlage mit zwei nebeneinander angeordneten erfindungsgemäßen Vorrichtungen.

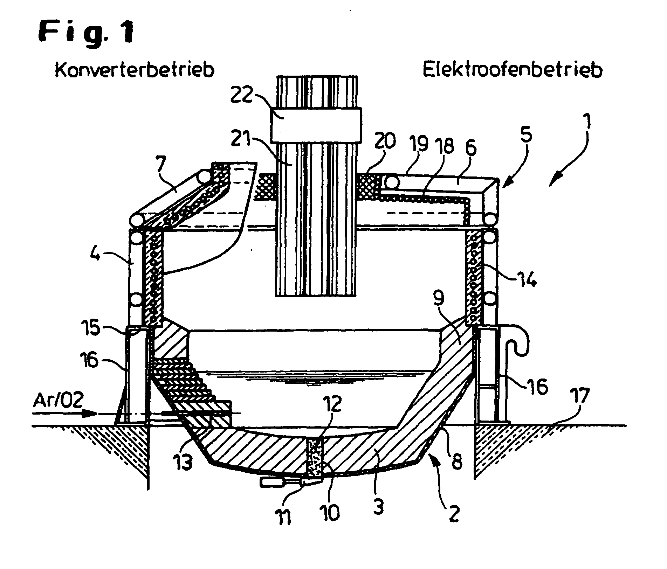

Figur 1 zeigt im Querschnitt ein Gefäß 1 zur Herstellung von Stahl, in dem sowohl die Einschmelzphase (Elektroofenbetrieb) als auch die Konverterphase (Konverterbetrieb) nacheinander durchgeführt werden. Dieses Gefäß 1 setzt sich aus einem Gefäßunterteil 2 mit einem Gefäßboden 3 sowie eine sich daran nach oben anschließende Seitenwandung 4 zusammen. Als Gefäßoberteil 5 ist für die Einschmelzphase ein wegschwenkbarer bzw. verfahrbarer Ofendeckel 6 vorgesehen, für die Konverterphase eine wegschwenkbare bzw. verfahrbare Konverterhaube 7, wie hier auf der linken Bildhälfte durch eine Teilzeichnung angedeutet. Das Gefäßunterteil 2 wird von einem metallischen Mantel 8 gebildet, welcher mit feuerfestem Material 9 ausgemauert ist. Entlang der Mittenachse des Gefäßes ist zentral eine Abstichöffnung 10 für die Bodenabstichmöglichkeit vorgesehen. Diese Abstichöffnung 10 durchdringt das Feuerfestmaterial 9 und wird von außen mittels eines horizontal verfahrbaren Schiebers 11 verschlossen. Denkbar ist auch ein wegklappbarer Verschluß. Während des Einschmelz- bzw. Konvertervorgangs ist das Abstichloch 10 mit einem Füllmaterial 12, beispielsweise Füllsand oder Granulat versehen, welcher zum Abstich nach Wegfahren des Schiebers 11 nach unten in die Stahlgießpfanne (nicht gezeigt) rieselt. Das obere gesinterte Granulat schmilzt durch den hydrostatischen Druck der sich darüber befindlichen Schmelze; der flüssige Stahl ergießt sich nach unten in die unterhalb des Gefäßes angeordnete Stahlgießpfanne. In Einzelfällen kann es auch vorkommen, daß mit einer abgewinkelten Sauerstofflanze das gesinterte Granulat von unten freigebrannt wird, um den Bodenabstich zu ermöglichen.

Weiterhin sind in das Gefäßunterteil 2 Düsen 13 (hier ist exemplarisch eine Düse dargestellt) eingebracht zur Versorgung der Schmelze mit Prozeßgasen wie beispielsweise Argon bzw. Sauerstoff zum Frischen.

Die Seitenwandungen 4 des Gefäßunterteils 2 bestehen zur Gefäßinnenseite hin aus wasserdurchflossenen Wänden 14. Die Seitenwandung 4 ist bei der gezeigten ersten Ausführungsform ohne Kippsystem so versetzt zu dem Gefäßboden 3 angeordnet, daß hervorstehende Absetzflächen 15 entstehen, die auf Absetzstützen 16 zur Positionierung des Gefäßes 1 Halt finden. Derartige Absetzstützen 16 sind um das Gefäß herum auf der Ofenbühne 17 angeordnet.

Bei der in Figur 1 gezeigten Ausführungsform wird in der 0°-Grundposition des Gefäßes 1 in eine unterhalb des Gefäßes angeordnete Pfanne (nicht gezeigt) abgestochen, gegebenenfalls wird die Pfanne anschließend einer Vakuumbehandlungsanlage zugeführt.

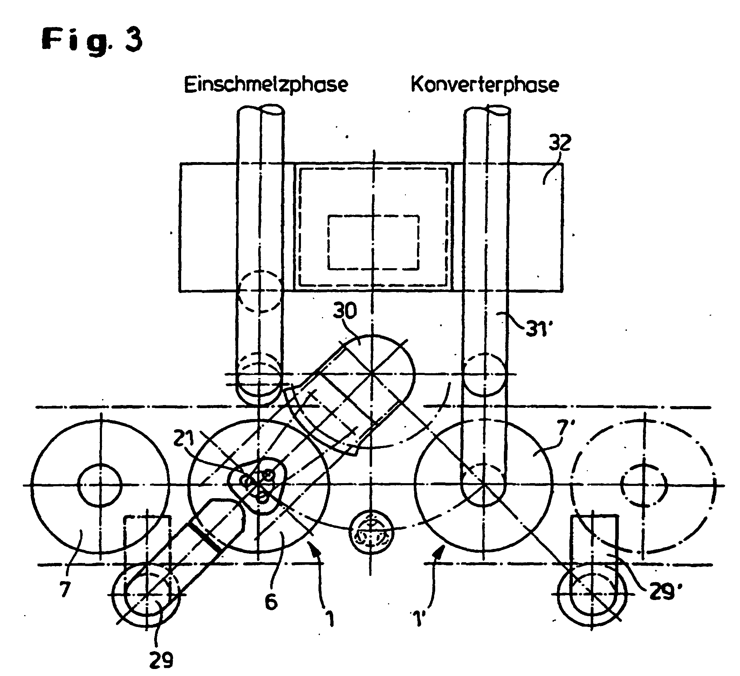

Zur Schmelzphase bzw. zum Elektroofenbetrieb wird das Gefäß 1 mit dem Ofendeckel 6 versehen, welcher neben dem ein- oder mehrteiligen wassergekühlten Deckelpanel 18 und dem dazugehörigen Traggerüst 19 ein Herzstück 20 aus Feuerfestmaterial aufweist, durch das hindurch die Elektroden 21 mittels einer Verfahreinheit einer Heizeinrichtung einführbar sind. Von dieser Heizeinrichtung ist in Figur 1 nur der Elektrodentragarm 22 für die Elektroden gezeigt. Mittels Elektrodenbetrieb werden die vorher in das Gefäß eingefüllten Einsatzstoffe - Schrott, flüssiges Roheisen, Teile von Ferrolegierungen, DRI/HBI, Zuschlagstoffe etc. - mittels des erzeugten Lichtbogens aufgeschmolzen. Nach Beendigung der Schmelzphase schließt sich die Konverterphase an. Unter dieser wird im vorliegenden Fall sowohl ein Legieren als auch das Frischen mit Sauerstoff zum Senken des Kohlenstoffgehaltes der Schmelze- hier durch die Düsen 13- verstanden. Legiert wird durch Zugabe von Schlackenbildnern und Legierungsmitteln. Für die Konverterphase werden zuerst der Ofendeckel 6 und dann die Elektroden 21 angehoben und horizontal weggeschwenkt. Anschließend wird die Konverterhaube oder der Konverterhut 7 auf das Gefäß 1 geschwenkt oder horizontal verfahren. Diese ist wie die Gefäßwandung 4 mit kühlwasserdurchflossenen Wänden 14 bzw. Feuerfestpanels versehen. Sie ist so gestaltet, daß die entstehenden Rauchgase an entsprechende Aufsätze - (vgl. Figur 3) - und von diesen an Entstaubungsanlagen weitergeleitet werden können.

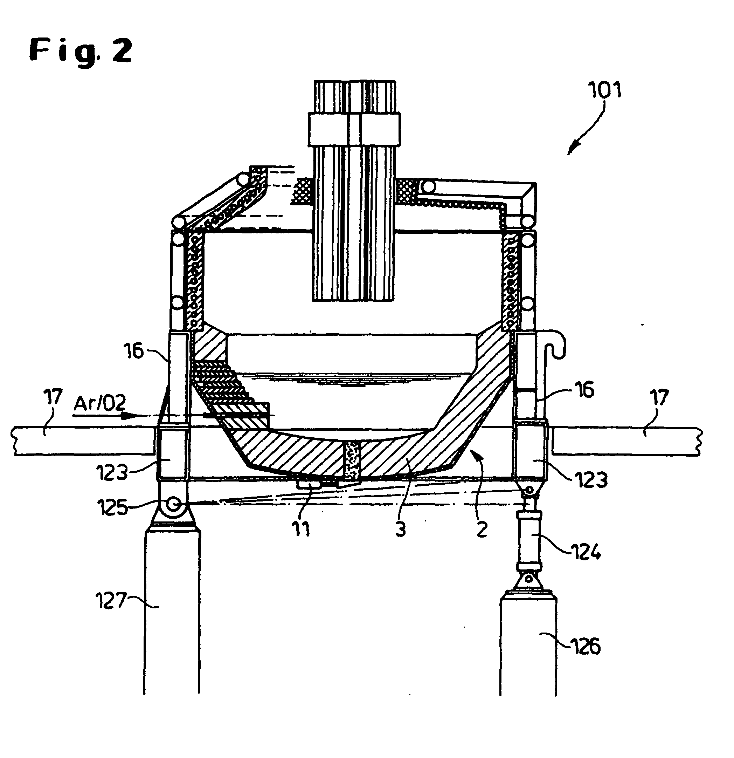

Nach einer zweiten Ausführungsform der erfindungsgemäßen Vorrichtung (Figur 2) weist das Gefäß 101 einen Kipprahmen 123 auf. Da das Gefäß der Figur 2 dem der Figur 1 entspricht, werden bei übereinstimmenden Bauteilen entsprechende Bezugszeichen verwendet. In Abweichung zu der Ausführungsform nach Figur 1 sind die Absetzstützen 16 nicht auf der Ofenbühne, sondern auf dem Kipprahmen 123 angeordnet. Der Kipprahmen 123 ist umlaufend zum unteren Teil des Gefäßbodens 3 angeordnet.

Dieser Kipprahmen 123 wird mittels eines oder mehrerer hydraulisch betriebener Hubzylinder 124 vertikal bewegt, die unterhalb des Kipprahmens angeordnet sind. Denkbar sind ebenso elektromotorische Antriebe für den Kipprahmen. Das Gefäß 101 wird auf diese Weise aus der Grundstellung in eine mit kleinen Winkeln - vorzugsweise ± 5°C - gekippte Position überführt (die gekippte Position ist nicht gezeigt). Zum Abfangen der Kippbewegung ist der Kipprahmen auf der zum Hubzylinder 124 gegenüberliegenden Seite auf einem Schwenklager 125 angeordnet. Kippwinkel sind mit strichpunktierten Linien eingezeichnet. Auf diese Weise ist es möglich, das Gefäß 101 in die vorher beschriebene Schräglage von ± 5° zu bewegen, wobei der Montage- bzw. der Betriebsaufwand im Vergleich zu dem bekannten Gefäß mit Tagrahmen erheblich reduziert ist. Der bzw. die Hubzylinder 124 sowie die Lagerelemente 125 sind auf weiteren Stützen 126, 127 positioniert, um unterhalb des Gefäßes 101 und der Ofenbühne 17 Freiraum zum Abstechen in eine Stahlpfanne zu schaffen.

Figur 3 zeigt eine Doppelofenanlage mit zwei nebeneinander angeordneten erfindungsgemäßen Anlagen, wobei zeitgleich in der einen Vorrichtung die Schmelzphase und in der anderen Vorrichtung die Konverter- bzw. Blasphase sowie umgekehrt ablaufen. Für die Einschmelzphase wird das erste Gefäß 1

## Patentansprüche

1. Anlage zur Herstellung von Stahl, umfassend ein Gefäß (1; 101; 1'), in dem der metallische Einsatz sowohl geschmolzen als auch gefrischt und gefeint wird, mit einem Gefäßoberteil (5;) mit mindestens einer Öffnung, durch die hindurch mindestens eine Elektrode (21) in das Gefäß einfahrbar ist, und mit einem Gefäßunterteil (2) mit Gefäßboden (3) sowie Mitteln zum Abstechen der Schmelze und Schlacke aus dem Gefäß,
**gekennzeichnet durch**
ein Bodenabstichsystem (10; 11) mit einer einzigen Öffnung (10) sowohl zum Abstechen der Schmelze als auch der Schlacke, wobei die in den Boden (3) des Gefäßunterteils eingebrachte Öffnung (10) des Bodenabstichsystems zur vertikalen Mittenachse des Gefäßes entweder zentrisch oder exzentrisch angeordnet ist und **durch** Seitenwanddüsen (13) im Gefäßunterteil (2) zum Einblasen von Sauerstoff und Argon in die Schmelze.

2. Anlage nach Anspruch 1,
**gekennzeichnet durch**
ein Kippsystem mit einem ein- oder mehrteiligen Rahmen (123; 223), der in Höhe des Gefäßbodens (3; 203) angeordnet ist und auf dem das Gefäß (101; 201) absetzbar ist, wobei der Gefäßboden (3; 203) darin eintaucht.

3. Anlage nach Anspruch 1 oder 2,
**dadurch gekennzeichnet,**
**daß** das Gefäßunterteil (2) seitlich versetzte Wandungsbereiche (4) oberhalb des Gefäßbodens (3) aufweist zur Bildung von stabilen Absetzflächen (15) des Gefäßes, die zur Auflage auf Absetzstützen (16) kommen, die auf einer stationären Ofenbühne (17), dem Fundament oder dem Kipprahmen (23) angeordnet sind.

4. Anlage nach Anspruch 2,
**dadurch gekennzeichnet,**
**daß** das Gefäßunterteil (202) seitlich verstärkte Gefäßbodenbereiche aufweist zur Ausbildung von Absetzflächen (215), die zur Auflage auf dem Kipprahmen (223) kommen.

5. Anlage nach den Ansprüchen 2 oder 4,
**dadurch gekennzeichnet,**
**daß** das Kippsystem mindestens ein Kippelement (124; 224) aufweist, das einseitig mittels einer Hubbewegung auf den Rahmen (123; 223) derart wirkt, daß der Rahmen und somit das Gefäß in eine Kippbewegung versetzt werden, sowie mit mindestens einem Lagerelement (125) zum Auffangen der Kippbewegung des Gefäßes.

6. Anlage nach einem der Ansprüch 1-5,
**dadurch gekennzeichnet,**
**daß** das Bodenabstichsystem ein Verschlußelement (11) umfaßt, welches nach dem Abstich die Abstichöffnung von außen verschließt, sowie eine Einfüllvorrichtung zum Befüllen der Abstichöffnung mit einem Füllmaterial (12).

7. Anlage nach einem der Ansprüche 1 bis 6,
**gekennzeichnet durch**
ein Schlackenabstichsystem mit einer verfahrbaren Schlackentür (228) in der Seitenwandung des Gefäßunterteils (202), wobei zum Schlackenabstich das Gefäß (201) mittels des Kippsystems verschwenkt ist.

8. Anlage nach einem der Ansprüche 1 bis 7,
**gekennzeichnet durch**
eine Heizeinrichtung (30, 31) zum Verschwenken der Elektroden (21) **durch** die in das Gefäßoberteil eingebrachte Öffnung, wobei die Heizeinrichtung auf einer Ofenbühne (17) oder einem Fundament fest angeordnet ist und die Öffnung im Verhältnis zum Umfang der Elektroden derart aufgeweitet ist, daß diese bei der Kippbewegung des Gefäßes nicht an die Öffnungswandung anstoßen.

9. Anlage nach einem der Ansprüche 1 bis 8;
**dadurch gekennzeichnet,**
**daß** das Gefäß als Festgefäß nicht lösbar oder als Wechselgefäß lösbar auf dem Fundament, der Ofenbühne (17) oder dem Kipprahmen (123; 223) angeordnet ist.

10. Anlage nach einem der Ansprüche 1 bis 9,
**gekennzeichnet durch**
ein Gefäß, in dem nacheinander die Prozesse des Aufschmelzens (Schmelzphase) und des Frischens und Feinens (Konverterphase) stattfinden, wobei das Gefäß (1, 101; 201) von unten nach oben aufweist:
das Gefäßunterteil (2, 202) mit einem Gefäßboden (3; 203) sowie eine sich daran anschließende bauchig ausgebildete Seitenwandung (4),
das Gefäßoberteil (5, 205) mit einer schwenkbaren Konverterhaube (7) oder einem schwenkbaren Ofendeckel (6) mit darin eingebrachtem Herzstück (20) aus Feuerfestmaterial mit der Elektrodenöffnung, wobei die Konverterhaube (7) und der Ofendeckel (6) das Gefäß wechselweise in Abhängigkeit der Schmelz- oder Konverterphase bedecken, sowie ein in das Gefäßunterteil eingebrachtes Düsenblassystem (13) zum Einbringen von Prozeßgasen.

11. Doppelofenanlage mit zwei benachbart zueinander angeordneten und wechselseitig jeweils in der Schmelz- oder Konverterphase betriebenen Anlagen nach einem der Ansprüche 1 bis 10.

## Claims

1. A system for producing steel, comprising a vessel (1; 101; 1'), in which the metallic charge is melted, as well as oxidized and refined, wherein said vessel contains an upper vessel part (5) with at least one opening, through which at least one electrode (21) can be inserted into the vessel, and a lower vessel part (2) with a vessel bottom (3), as well as means for tapping the melt and the slag from the vessel, **characterized in** a bottom tapping system (10; 11) with a single opening (10) for tapping the melt as well as the slag, wherein the opening (10) of the bottom tapping system is arranged in the bottom (3) of the lower vessel part either centric or eccentric referred to the vertical center line of the vessel, and **in that** side wall nozzles (13) for injecting oxygen and argon into the melt are provided in the lower vessel part (2).

2. The system according to Claim 1, **characterized in** a tilting system with a one-part or multipart frame (123; 223) that is arranged at the elevation of the vessel bottom (3; 203) and on which the vessel (101; 201) can be seated, wherein the vessel bottom (3; 203) is inserted therein.

3. The system according to Claim 1 or 2, **characterized in that** the lower vessel part (2) contains laterally offset wall regions (4) above the vessel bottom (3) in order to form stable seating surfaces (15) of the vessel that come in contact with seating supports (16) arranged on a stationary top platform (17), the base or the tilting frame (23).

4. The system according to Claim 2, **characterized in that** the lower vessel part (202) contains laterally reinforced vessel bottom regions in order to form seating surfaces (215) that come in contact with the tilting frame (223).

5. The system according to Claim 2 or 4, **characterized in that** the tilting systems contains at least one tilting element (124; 224) that subjects one side of the frame (123; 223) to a lifting movement, namely such that the frame and consequently the vessel carry out a tilting movement, as well as at least one support element (125) for seizing the tilting movement of the vessel.

6. The system according to one of Claims 1-5, **characterized in that** the bottom tapping system comprises a closing element (11) that closes the tapping sprout from the outside after the tapping process, as well as a filling device for filling the tapping spout with a filler material (12).

7. The system according to one of Claims 1-6, **characterized in** a slag tapping system with a displaceable slag door (228) in the side wall of the lower vessel part (202), wherein the vessel (201) is tilted by means of the tilting system in order to tap the slag.

8. The system according to one of Claims 1-7, **characterized in** a heating device (30, 31) for pivoting the electrodes (21) through the opening arranged in the upper vessel part, wherein the heating device is rigidly arranged on a top platform (17) or a base, and wherein the opening is widened relative to the circumference of the electrodes in such a way that they do not contact the wall of the opening during the tilting movement of the vessel.

9. The system according to one of Claims 1-8, **characterized in that** the vessel is either arranged on the base, the top platform (17) or the tilting frame (123; 223) rigidly in the form of a fixed vessel or removably in the form of an exchangeable vessel.

10. The system according to one of Claims 1-9, **characterized in** a vessel, in which the melting process (melting phase) and the oxidizing and refining processes (converting phase) are successively carried out, wherein the vessel (1, 101; 201) comprises the following elements viewed from the bottom toward the top: the lower vessel part (2, 202) with a vessel bottom (3; 203) as well as an adjacent side wall (4) that is realized in a bulged fashion, the upper vessel part (5, 205) with a pivoted converter hood (7) or a pivoted furnace cover (6) with a core (20) of refractory material that contains the electrode opening arranged therein, wherein the converter hood (7) and the furnace cover (6) alternately cover the vessel in dependence on the melting phase or the converting phase, and a nozzle system (13) that is arranged in the lower vessel part and serves for injecting process gases.

11. A double furnace system with two systems according to one of Claims 1-10 that are arranged adjacent to one another and alternately operate in the melting phase or the converting phase, respectively.

## Revendications

1. Installation de production d'acier, comprenant un récipient (1 ; 101 ; 1') dans lequel la charge métallique est à la fois fondue, revivifiée et affinée, présentant une partie supérieure de récipient (5) avec au moins une ouverture à travers laquelle on peut introduire au moins une électrode (21) dans le récipient, et présentant une partie inférieure de récipient (2) avec fond de récipient (3) ainsi que des moyens de dégagement de la matière fondue et du laitier hors du récipient,
**caractérisée par**
un système de dégagement par le fond (10 ; 11) avec une ouverture (10) unique pour dégager aussi bien la matière fondue que le laitier, l'ouverture (10) du système de dégagement par le fond, ménagée dans le fond (3) de la partie inférieure de récipient, étant agencée soit de manière centrée soit de manière décentrée par rapport à l'axe médian vertical du récipient, et par
des tuyères de paroi latérale (13) dans la partie inférieure de récipient (2) pour insuffler de l'oxygène et de l'argon dans la matière en fusion.

2. Installation selon la revendication 1,
**caractérisée par**
un système basculant avec un cadre (123 ; 223) en une ou plusieurs parties, qui est agencé à la hauteur du fond de récipient (3 ; 203) et sur lequel on peut poser le récipient (101 ; 201), le fond de récipient (3 ; 203) plongeant dans celui-ci.

3. Installation selon l'une ou l'autre des revendications 1 et 2,
**caractérisée en ce que**
la partie inférieure de récipient (2) présente des zones de paroi (4) décalées latéralement en dessus du fond de récipient (3) pour former des surfaces de pose (15) stables du récipient, qui viennent en appui sur des supports de pose (16) qui sont agencés sur une plateforme de four (17) stationnaire, sur le socle ou sur le cadre basculant (23).

4. Installation selon la revendication 2,
**caractérisée en ce que**
la partie inférieure de récipient (202) présente des zones de fond de récipient renforcées latéralement pour former des surfaces de pose (215) qui viennent en appui sur le cadre basculant (223).

5. Installation selon l'une ou l'autre des revendications 2 et 4,
**caractérisée en ce que**
le système basculant présente au moins un élément basculant (124 ; 224) qui agit d'un côté sur le cadre (123 ; 223) au moyen d'un mouvement de levage, de telle sorte que le cadre et par conséquent le récipient sont mis dans un mouvement de basculement, ainsi qu'au moins un élément de palier (125) pour intercepter le mouvement de basculement du récipient.

6. Installation selon l'une des revendications 1 à 5,
**caractérisée en ce que**
le système de dégagement par le fond comprend un élément de fermeture (11) qui, après le dégagement, ferme l'ouverture de dégagement depuis l'extérieur, ainsi qu'un dispositif de remplissage pour remplir l'ouverture de dégagement par un matériau de remplissage (12).

7. Installation selon l'une des revendications 1 à 6,
**caractérisée par**
un système de dégagement du laitier comprenant une porte à laitier (228) mobile dans la paroi latérale de la partie inférieure de récipient (202), le récipient (201) étant pivoté au moyen du système basculant pour dégager le laitier.

8. Installation selon l'une des revendications 1 à 7,
**caractérisée par**
un dispositif de chauffage (30, 31) pour faire pivoter les électrodes (21) à travers l'ouverture ménagée dans la partie supérieure de récipient, le dispositif de chauffage étant agencé de manière fixe sur une plateforme de four (17) ou sur un socle, et l'ouverture étant évasée par rapport à la circonférence des électrodes de telle sorte que celles-ci ne se heurtent pas à la paroi de l'ouverture lors du mouvement de basculement du récipient.

9. Installation selon l'une des revendications 1 à 8,
**caractérisée en ce que**
le récipient est agencé sur le socle, sur la plateforme de four (17) ou sur le cadre basculant (123 ; 223), de manière indétachable en tant que récipient fixe ou de manière détachable en tant que récipient interchangeable.

10. Installation selon l'une des revendications 1 à 9,
**caractérisée par**
un récipient dans lequel ont lieu l'un après l'autre les processus de fusion (phase de fusion) et de revivification et d'affinage (phase de convertisseur), le récipient (1, 101 ; 201) présentant de bas en haut : la partie inférieure de récipient (2, 202) avec un fond de récipient (3 ; 203) ainsi qu'une paroi latérale (4) réalisée bombée et se raccordant à celui-ci, la partie supérieure de récipient (5, 205) avec une cloche de convertisseur (7) pivotante ou un couvercle de four (6) pivotant comportant un noyau (20) en matériau réfractaire introduit dans celui-ci et présentant l'ouverture d'électrode, la cloche de convertisseur (7) et le couvercle de four (6) recouvrant en alternance le récipient en fonction de la phase de fusion et de la phase de convertisseur, ainsi qu'un système de soufflage à tuyères (13) monté dans la partie inférieure de récipient pour introduire des gaz de traitement.

11. Installation à four double, comportant deux installations selon l'une des revendications 1 à 10, agencées au voisinage l'une de l'autre et fonctionnant alternativement et respectivement en phase de fusion ou en phase de convertisseur.
